# EUROPEAN PATENT SPECIFICATION

(11) **EP 3 135 127 B1**
(45) Date of publication and mention of the grant of the patent: **01.01.2025**
(21) Application number: 16190926.2
(22) Date of filing: 14.11.2013
(51) Int. Cl.: A23N 12/10

(54) **APPARATUS FOR DRYING AND/OR ROASTING BEANS OR NIBS**
VORRICHTUNG ZUM TROCKNEN UND/ODER RÖSTEN VON BOHNEN ODER NIBS
APPAREIL POUR SÉCHER ET/OU TORRÉFIER DES FÈVES OU DES GRAINES

(30) Priority: 14.11.2012 EP 12192655
(43) Date of publication of application: 01.03.2017
(62) Divisional of application: 13789592.6
(73) Proprietor: Royal Duyvis Wiener B.V., 1541 KD Koog aan de Zaan (NL)
(72) Inventor: Koelemeijer, Reiner, 1561 DK Krommenie (NL)
(74) Representative: De Vries & Metman

(56) References cited:
- EP-A2- 0 328 791
- WO-A1-92/12643
- DE-A1- 2 116 807
- GB-A- 139 503
- US-A- 1 547 655
- US-A- 1 566 430
- US-A- 2 279 362
- US-A- 4 559 720

## Description

The invention relates to an apparatus for drying and/or roasting beans, such as cocoa beans, or parts of beans, such as nibs, comprising a frame, a drum for receiving the (parts of) beans, rotatably mounted in the frame and provided with an inlet for a fluid, in particular a gas, such as heated air, a fan for feeding the fluid via the inlet to the drum, and a driving means for rotating the drum. Typically, the apparatus further comprises a burner or the like for heating the exterior wall of the drum.

WO 2009/127728 discloses a method for drying and/or roasting cocoa nibs and/or cocoa nib pieces in a drum. In addition to heating the drum from the outside for transferring heat by convection, clean hot gas is fed to the drum.

Also, in WO 92/12643, to avoid having to dry and roast coffee and cocoa beans (indicated by numeral 10 in the Figure of WO 92/12643) directly in flue gas in a drying furnace, the drying takes place in a drum (6) to which air (1) is supplied, said air being heated by flue gas (5) from a burner (3) in a heat exchanger (18), and where the flue gases (5) are subsequently supplied to the exterior of the drum (6). Thus, the drying of the beans (10) in the drum (6) is performed totally cut off from the flue gases (5), eliminating the risk that the beans will become exposed to pollution from the flue gases. At the same time the beans (10) are heated uniformly partly from the sides of the drum and partly by the air (1) through the drum. According to WO 92/12643, this creates an effective and yet gentle drying and roasting at no risk of partial overheating causing the beans to be burned.

In the embodiment shown in the Figure of WO 92/12643, the drum 6 is provided, at its ends, with an inlet and an outlet pipe to re-circulate the air through the drum. The capacity of the drum is up to 240 kilos of beans.

US 2,279,362 discloses a drum (15) fitted with a series of sheet metal partitioning discs which are pierced by central apertures through which a hollow core member (26) extends. End discs (21) are secured to the drum while further discs are supported by the core member with a loose fit in the drum. The core member forms a conduit for hot air for drying and roasting purposes and adjacent the discharge end of the drum opens into the drum.

US 1,547,655 relates to a method of roasting material, which consists in heating pure air, next directing the pure heated air unmixed with any products of combustion upon the batch of material to be roasted, and lastly checking the roast by an admixture of atmospheric air with said pure heated air.

GB 139 503 relates to a roasting apparatus suitable for the treatment of grains, seeds, beans, coffee, cocoa, soya beans and the like, as also of powders and flour, in which a group of tubes passes through the roasting receptacle and so that the mass is distributed over a large area to allow of a rapid heating or cooling in a closed vessel.

EP 328 791 relates to a roasting device that is composed of a roasting body, a rotary drum supported on the inside of the roasting body to rotate in a horizontal attitude to accommodate and stir the coffee beans, infrared heaters disposed on the inner wall surface of the roasting body to surround the rotary drum in order to heat the coffee beans accommodated in the rotary drum by radiant heat, and a circulating path to circulate the hot air in the rotary drum into the roasting body in order to utilize the thermal energy effectively.

It is an object of the present invention to provide an improved industrial drum roaster.

To this end, the apparatus according to the present invention is characterized as defined in claim 1. In an embodiment, the inlet is coaxial with the axis of rotation of the drum. In another embodiment the inlet extends thorough a part of the driving means, e.g. through a driven pulley or gear of the driving means.

Thus, construction and/or operation of the apparatus is simplified, more robust and better suited for use on an industrial scale.

According to the invention, the apparatus comprises a door located on the end of the drum opposite the fluid inlet and the driving means.

In a further embodiment, the outlet and/or inlet for the (parts of) beans is located in the door.

According to the invention, an outlet for the fluid, in addition to the outlet for the (parts of) beans, is located on the end of the drum opposite the fluid inlet and the driving means, i.e. the opposite end of the drum comprises both an outlet for discharging nibs or beans from the drum and an exhaust for the fluid.

To prevent clogging, in an embodiment, the inlet for the fluid comprises a tube for containing the fluid and a means, preferably a conveying screw positioned inside the tube, for returning materials originating from the drum to the drum.

In another embodiment, the apparatus comprises a heater and a controller for heating the fluid, prior to it being fed to the drum, to a temperature in a range from 110 to 200 °C.

Within the framework of the present invention the adjective "industrial" is defined as having a capacity of at least 2000 kg of (parts of) beans per batch.

In an embodiment, the outlet of the drum roaster comprises a mechanism for moving the door rearwards in axial direction over a limited distance, e.g. a distance in a range from 2 to 15 centimeters, thus providing, e.g. after roasting, sufficient clearance for the nibs to exit the drum, e.g. via a chute. In a refinement, the clearance is at least substantially annular.

The invention will now be explained in more detail with reference to the figures, which schematically show an example of a drum roaster according to the present invention.
Figure 1 is a cross-sectional side view of a drum roaster in accordance with the present invention.
Figure 2 is a perspective view of the door of the drum roaster shown in Figure 1.
Figure 3 is a perspective view of the belt drive and air inlet of the drum roaster shown in Figure 1.

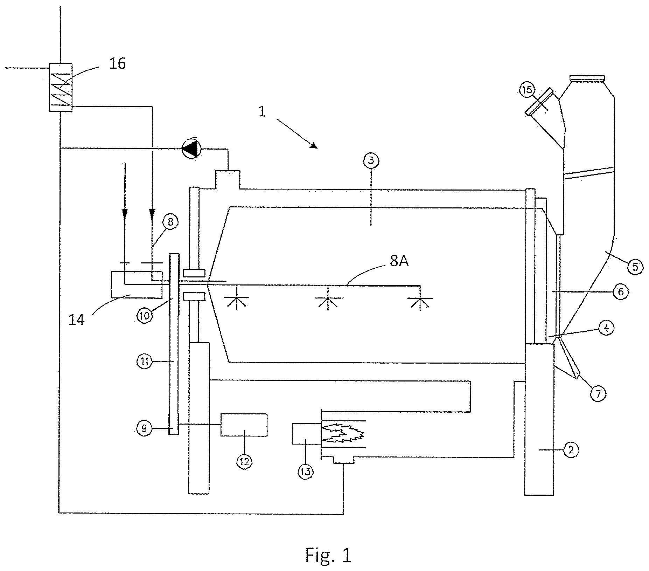

Figure 1 is a cross-sectional side view of a drum roaster 1 in accordance with the present invention for drying and/or roasting cacao nibs. The drum roaster comprises a frame 2 and a drum 3 for receiving up to 5 tons of nibs, rotatably mounted in the frame, e.g. resting on bearings. On one side the drum comprises a door 4, shown in more detail in Figure 2, and an inlet 5 for the nibs. The drum roaster 1 comprises a mechanism 6, e.g. comprising pneumatic or hydraulic cylinders (not shown), for moving the door rearwards, i.e. away from the drum, in axial direction and over a limited distance, thus providing, after roasting, an annular clearance sufficient for the nibs to exit the drum, e.g. via a chute 7 and preferably without fully opening the door.

The other end of the drum is provided with an inlet 8 for air and a belt drive, comprising a plurality of pulleys 9, 10, a belt 11, and a motor 12, for rotating the drum. The inlet is coaxial with the axis of rotation of the drum and extends through the driven pulley 10 fixed to the drum. In this example, the inlet comprises a tube 8A extending through the greater part of the drum. A burner 13 is mounted near, e.g. below the drum, for heating the exterior wall of the drum with flue gas.

A fan 14 is provided for feeding the gas from the surroundings via a heat exchanger (not shown) and the inlet to the drum. The circuits for flue gas from the burner and air to be fed to the drum are completely separated.

In addition to the inlet for the (parts of) beans, the door comprises a fluid outlet 15 for exhausting gas from the drum.

The invention is not restricted to the above-described embodiments, which can be varied in a number of ways within the scope of the claims.

## Claims

1. Apparatus (1) for drying and/or roasting beans, such as cocoa beans, or parts of beans, such as nibs, comprising a frame (2), a drum (3) for receiving the beans or the parts of beans, rotatably mounted in the frame (2) and provided with an inlet (8) for a fluid, in particular a gas, such as heated air, a fan (14) for feeding the fluid via the inlet (8) to the drum (3), a burner (13) for heating the exterior wall of the drum, a driving means (9-12) for rotating the drum (3), which fluid inlet and driving means are located on the same end of the drum, a door (4), an outlet (7) and an inlet (5) for the beans or the parts of beans, and an outlet (15) for the fluid, which door (4), outlet (7) and inlet (5) for the beans or the parts of beans and outlet (15) for the fluid are located on the end of the drum opposite the fluid inlet and the driving means (9-12).

2. Apparatus (1) according to claim 1, wherein the inlet for the fluid (8) is coaxial with the axis of rotation of the drum (3) .

3. Apparatus (1) according to claim 1 or 2, wherein the inlet for the fluid (8) extends through a part of the driving means (9-12).

4. Apparatus (1) according to any one of the preceding claims, wherein the inlet (8) for the fluid comprises a tube (8A) for containing the fluid and a means for returning materials originating from the drum to the drum.

5. Apparatus (1) according to claim 4, wherein said means comprises a conveying screw positioned inside the tube.

6. Apparatus (1) according to any one of the preceding claims, comprising a heater (16) and a controller for heating the fluid to a temperature in a range from 110 to 200 °C.

7. Apparatus (1) according to any one of the preceding claims, wherein the drum (3) has a capacity of at least 2000 kg, preferably at least 3000 kg of (parts of) beans.

8. Apparatus (1) according to any one of the preceding claims, comprising a mechanism for moving the door (4) rearwards in axial direction thus providing sufficient clearance for the nibs to exit the drum (3).

9. Apparatus (1) according to claim 8, wherein the door (4) is movable over a distance in a range from 2 to 15 centimeters.

10. Apparatus (1) according to claim 8 or 9, wherein the clearance is at least substantially annular.

## Patentansprüche

1. Vorrichtung (1) zum Trocknen und/oder Rösten von Bohnen, wie z.B. Kakaobohnen, oder Teilen von Bohnen, wie z.B. Raspeln, aufweisend einen Rahmen (2), eine Trommel (3) zum Aufnehmen der Bohnen oder der Teile von Bohnen, die in dem Rahmen (2) drehbar montiert ist und die mit einem Einlass (8) für ein Fluid, insbesondere ein Gas, wie z.B. erwärmte Luft, versehen ist, ein Gebläse (14) zum Zuführen des Fluid via den Einlass (8) zu der Trommel (3), einen Brenner (13) zum Beheizen der Außenwand der Trommel, ein Antriebsmittel (9-12) zum Drehen der Trommel (3), wobei der Fluideinlass und das Antriebsmittel am gleichen Ende der Trommel angeordnet sind, eine Tür (4), einen Auslass (7) und einen Einlass (5) für die Bohnen oder die Teile von Bohnen, und einen Auslass (15) für das Fluid, wobei die Tür (4), der Auslass (7) und der Einlass (5) für die Bohnen oder die Teile von Bohnen, und der Auslass (15) für das Fluid an dem Ende der Trommel angeordnet sind, das entgegengesetzt zu dem Fluideinlass und den Antriebsmitteln (9-12) ist.

2. Vorrichtung (1) gemäß Anspruch 1, wobei der Einlass für das Fluid (8) koaxial mit der Drehachse der Trommel (3) ist.

3. Vorrichtung (1) gemäß Anspruch 1 oder 2, wobei der Einlass für das Fluid (8) sich durch einen Teil des Antriebsmittels (9-12) hindurch erstreckt.

4. Vorrichtung (1) gemäß irgendeinem der vorigen Ansprüche, wobei der Einlass (8) für das Fluid ein Rohr (8A) zum Aufnehmen des Fluid und ein Mittel zum Rückführen von Materialien, die aus der Trommel stammen, zu der Trommel.

5. Vorrichtung (1) gemäß Anspruch 4, wobei das Mittel eine Förderschnecke aufweist, die in dem Rohr angeordnet ist.

6. Vorrichtung (1) gemäß irgendeinem der vorigen Ansprüche, aufweisend eine Heizvorrichtung (16) und eine Steuervorrichtung zum Heizen des Fluid auf eine Temperatur in einem Bereich von 110 bis 200 °C.

7. Vorrichtung (1) gemäß irgendeinem der vorigen Ansprüche, wobei die Trommel (3) eine Kapazität von wenigstens 2000 kg, bevorzugt wenigstens 3000 kg (Teilen von) Bohnen hat.

8. Vorrichtung (1) gemäß irgendeinem der vorigen Ansprüche, aufweisend einen Mechanismus zum Bewegen der Tür (4) in Axialrichtung nach hinten, um dadurch ausreichend Freiraum für die Raspeln zum Verlassen der Trommel (3) bereitzustellen.

9. Vorrichtung (1) gemäß Anspruch 8, wobei die Tür (4) über eine Distanz in einem Bereich von 2 bis 15 Zentimetern bewegbar ist.

10. Vorrichtung (1) gemäß Anspruch 8 oder 9, wobei der Freiraum zumindest im Wesentlichen ringförmig ist.

## Revendications

1. Appareil (1) pour sécher et/ou torréfier des fèves, telles que des fèves de cacao, ou des parties de fèves, telles que des éclats de fèves, comprenant un châssis (2), un tambour (3) pour recevoir les fèves ou les parties de fèves, monté rotatif dans le châssis (2) et pourvu d'une entrée (8) pour un fluide, en particulier un gaz, tel que de l'air chaud, un ventilateur (14) pour introduire le fluide par l'intermédiaire de l'entrée (8) dans le tambour (3), un brûleur (13) pour chauffer la paroi extérieure du tambour, un moyen d'entraînement (9-12) pour faire tourner le tambour (3), lesquels entrée de fluide et moyen d'entraînement sont situés sur la même extrémité du tambour, une porte (4), une sortie (7) et une entrée (5) pour les fèves ou les parties de fèves, et une sortie (15) pour le fluide, lesquelles porte (4), sortie (7) et entrée (5) pour les fèves ou les parties de fèves et sortie (15) pour le fluide sont situées sur l'extrémité du tambour opposée à l'entrée de fluide et le moyen d'entraînement (9-12).

2. Appareil (1) selon la revendication 1, dans lequel l'entrée (8) pour le fluide est coaxiale à l'axe de rotation du tambour (3).

3. Appareil (1) selon la revendication 1 ou 2, dans lequel l'entrée (8) pour le fluide s'étend à travers une partie du moyen d'entraînement (9-12).

4. Appareil (1) selon l'une quelconque des revendications précédentes, dans lequel l'entrée (8) pour le fluide comprend un tube (8A) destiné à contenir le fluide et un moyen de retour des matières provenant du tambour vers le tambour.

5. Appareil (1) selon la revendication 4, dans lequel ledit moyen comprend une vis de transport positionnée à l'intérieur du tube.

6. Appareil (1) selon l'une quelconque des revendications précédentes, comprenant un dispositif de chauffage (16) et un dispositif de commande pour chauffer le fluide à une température dans une plage de 110 à 200 °C.

7. Appareil (1) selon l'une quelconque des revendications précédentes, dans lequel le tambour (3) présente une capacité d'au moins 2 000 kg, de préférence d'au moins 3 000 kg de (parties de) fèves.

8. Appareil (1) selon l'une quelconque des revendications précédentes, comprenant un mécanisme pour déplacer la porte (4) vers l'arrière dans une direction axiale, pour ainsi fournir un espace libre suffisant pour que les éclats de fèves sortent du tambour (3).

9. Appareil (1) selon la revendication 8, dans lequel la porte (4) est mobile sur une distance dans une plage de 2 à 15 centimètres.

10. Appareil (1) selon la revendication 8 ou 9, dans lequel l'espace libre est au moins sensiblement annulaire.
